# FASCICULE DE BREVET EUROPEEN

(11) **EP 2 745 752 B1**
(45) Date de publication et mention de la délivrance du brevet: **09.01.2019**
(21) Numéro de dépôt: 13196394.4
(22) Date de dépôt: 10.12.2013
(51) Int. Cl.: A47J 31/50, A47G 19/12, A47G 19/14

(54) **Couvercle de verseuse et ensemble pour la distribution de boisson comprenant un tel couvercle et une verseuse**
Deckel eines Ausgussgefäßes, und Einheit für die Getränkeausgabe, die einen solchen Deckel und ein solches Ausgussgefäß umfasst
Lid of a pouring spout and assembly for dispensing beverages including such a lid and a pouring spout

(30) Priorité: 19.12.2012 FR 1262355
(43) Date de publication de la demande: 25.06.2014
(73) Titulaire: SEB S.A., 69130 Ecully (FR)
(72) Inventeur: Cour, Angéline, 21000 Dijon (FR); Morin, Gilles, 21490 Varois et Chaignot (FR)
(74) Mandataire: Regimbeau

(56) Documents cités:
- EP-A1- 0 442 076
- DE-A1-102010 038 003
- US-A- 3 853 251

## Description

### 1. Domaine de l'invention

La présente invention concerne le domaine de la préparation de boissons, y compris celles multicouches avec différents types d'ingrédients disposés en couches, telles que « cappuccino », « macchiato ». Elle vise en particulier les couvercles destinés aux verseuses prévues pour contenir des boissons telles que du café, chocolat, thé, la verseuse étant également prévue pour les machines de préparation de boissons.

### 2. Art antérieur

On connait dans l'art antérieur divers couvercles prévus pour des verseuses adaptées à contenir et verser des boissons infusées. Les verseuses présentent en général un bec verseur, et les couvercles qui y sont adaptés peuvent fermer et ouvrir partiellement le bec verseur pour permettre le versement vers un contenant adapté. Pour cela, des couvercles de verseuses connus comprennent une première partie et une seconde partie plus ou moins flexible et mobile par rapport à la première partie pour fermer et ouvrir, au moins partiellement, une ouverture que présente la verseuse.

Un tel couvercle est décrit dans le brevet US 3 853 251. Un premier inconvénient qui ressort de ce brevet, est que la seconde partie flexible de ce couvercle est liée à la première partie du couvercle au moyen d'une liaison pivot. Cette liaison est en général une charnière permettant à la seconde partie de pivoter selon un axe de rotation pour relever la seconde partie ou l'abaisser sur une bordure de la verseuse. Dans d'autres exemples de couvercles, la liaison pivot peut encore être réalisée par un amincissement de l'épaisseur de la matière du couvercle pour créer une zone de pliage entre la première et seconde partie de sorte à permettre le pivotement de la seconde partie quand le liquide est déversé dans un réceptacle. Un autre inconvénient du couvercle décrit dans le brevet US 3 853 251 est que la seconde partie présente deux points d'appui avec la première partie du couvercle de sorte que la seconde partie maintienne une position horizontale au-dessus du bec verseur du couvercle et, qu'en situation de service, l'utilisateur la relève via un bouton pour verser la boisson.

Par conséquent, dans les situations de service, il est impossible de contrôler le débit puisque soit la seconde partie est d'abord relevée, soit le liquide la déplace (la relève).

DE 10 2010 038 003 A1 montre un couvercle ayant une partie déformable entre plusieurs positions.

### 3. Objectif de l'invention

L'invention a notamment pour objectif de pallier tout ou partie des inconvénients de l'art antérieur.

Plus précisément, un objectif de l'invention est de fournir des moyens permettant de réaliser une boisson multicouches comprenant différents liquides.

Un objectif de l'invention est de fournir un couvercle permettant de réduire le débit de versement du liquide contenu dans une verseuse, notamment dans les situations de services, afin de réaliser des boissons multicouches à base de café, telle qu'un « latte macchiato ».

Un autre objectif de l'invention est de fournir une solution qui soit simple, universelle et peu coûteuse.

### 4. Résumé de l'invention

Ces objectifs sont atteints grâce à un couvercle de verseuse comprenant une paroi latérale et adaptée à contenir et verser une boisson, le couvercle comprenant une première partie et une seconde partie flexible par rapport à la première partie pour fermer et ouvrir, au moins partiellement, une ouverture que présente la verseuse, la seconde partie comprenant une extrémité proximale et une extrémité distale. La seconde partie est solidarisée à la première partie via l'extrémité proximale par une liaison fixe et la seconde partie présente une capacité de déformation élastique ayant un module de Young compris entre 0.001 et 0,1 GPa et est agencée pour prendre appui sur la paroi latérale de la verseuse.

Ainsi, avec un tel couvercle et notamment avec la seconde partie flexible et souple qui est fixée au moyen d'une liaison fixe, il est possible de s'adapter à n'importe quel type de verseuse, en particulier les verseuses comprenant un bec verseur. En effet, une liaison fixe permet d'éviter que la deuxième partie ne bascule pas complètement vers l'intérieur de la verseuse. En ce sens, nous entendons par le terme « fixe » une connexion qui immobilise l'extrémité proximale de la seconde partie à la première partie du couvercle uniquement dans une zone de fixation et qui évite le basculement par rotation (liaison pivot) de la seconde partie par rapport à la première partie. Cette seconde partie flexible, par sa capacité de déformation, prend appui sur les parois de la verseuse, cet agencement permettant alors en situation de service avec une verseuse, que le débit soit réduit.

Selon une caractéristique avantageuse, la première partie peut présenter une entaille dans laquelle est reçue la seconde partie montée mobile. Cet agencement permet de faciliter la mobilité de la seconde partie par rapport à la première.

Selon une caractéristique importante, la première partie présente un bord périphérique et l'extrémité distale de la seconde partie s'étendant au-delà du bord périphérique. Cela permet qu'en position d'utilisation de la deuxième partie à l'intérieur de la verseuse que celle-ci puisse prendre appui contre la paroi latérale interne que présente la verseuse, avec une surface suffisante.

Selon un mode de réalisation, l'extrémité distale de la seconde partie peut comprendre une échancrure pour faciliter le passage du liquide contenu dans la verseuse quand la seconde partie se trouve à l'intérieur de la verseuse.

De manière préférée, la première partie comprend un matériau plastique rigide et la seconde partie comprend un matériau élastomère qui permet la déformation élastique.

Selon encore une caractéristique importante, la liaison fixe est une fixation qui immobilise à cet endroit la seconde partie. De la sorte, la seconde partie flexible ne pivote pas.

L'invention concerne un ensemble comprenant un couvercle qui présente les caractéristiques susmentionnées et une verseuse pour machine de préparation de boisson et destinée contenir et verser ladite boisson. La verseuse présente un fond, duquel s'élève une paroi latérale, une ouverture et un bec verseur formés par une bordure périphérique de la paroi latérale, le couvercle pouvant être amovible vis-à-vis de la verseuse et agencé pour ouvrir et fermer au moins partiellement l'ouverture et le bec verseur par lequel la boisson est versée.

Selon une caractéristique importante de l'invention, dans une situation où le couvercle est posé sur l'ouverture, la seconde partie du couvercle est mobile entre au moins :
- une première position dans laquelle l'extrémité distale repose sur la bordure périphérique de la verseuse et dans laquelle elle n'empêche pas le versement de la boisson; et,
- une deuxième position dans laquelle l'extrémité distale se trouve à l'intérieur de la paroi latérale de la verseuse et dans laquelle au moins une partie de l'extrémité distale est plaquée contre la paroi latérale de la verseuse.

De la sorte, comme énoncé précédemment, la seconde partie flexible peut prendre appui contre la paroi latérale interne de la verseuse sans basculer à l'intérieur de celle-ci.

Pour que la seconde partie du couvercle autorise la régulation du débit au niveau du bec verseur au moins dans la deuxième position, la seconde partie est située en regard du bec verseur.

Dans le même but, quand la seconde partie se trouve dans la deuxième position, un jeu peut être défini entre la paroi latérale de la verseuse et l'extrémité distale de la seconde partie pour autoriser un débit limité de la boisson lors du versement.

Toujours dans un but de réduire le débit, dans la deuxième position, un passage peut être défini sous le bec verseur par lequel la boisson peut sortir alors que l'extrémité distale de la seconde partie du couvercle est en appui intérieurement, de part et d'autre du bec verseur, contre la paroi latérale de la verseuse.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue en perspective et en éclatée d'un ensemble comprenant un couvercle et une verseuse selon l'invention ;
- La figure 2 est une vue en coupe d'un couvercle posé sur une verseuse dans une première position ;
- La figure 3 est une vue en coupe d'un couvercle posé sur une verseuse dans une deuxième position ;
- La figure 4 représente schématiquement une vue de dessus du couvercle sur une verseuse selon la figure 3 ;
- Les figures 5 et 6 sont des modes de réalisation de fixation d'un couvercle ;
- La figure 7 représente un exemple de seconde partie d'un couvercle.

### 6. Description détaillée

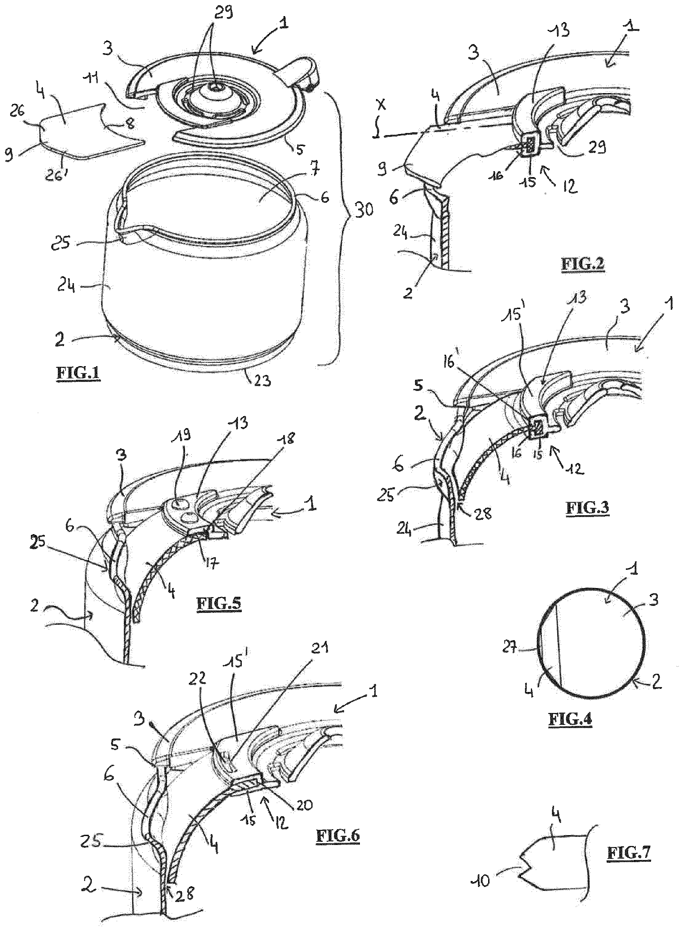

Sur la figure 1 est illustré un exemple de couvercle 1 destiné à une verseuse 2 adaptée à contenir et verser une boisson. Ce couvercle 1 fait partie également comme prévu par l'invention et sur la figure 1 d'un ensemble 30 comprenant ledit couvercle 1 et une verseuse 2.

Le couvercle 1 comprend une première partie 3 et une seconde partie 4. La première partie 3 est de forme circulaire ou sensiblement circulaire et est constituée en un matériau rigide. La seconde partie 4 s'étend longitudinalement suivant une direction X, est flexible par rapport à la première partie pour fermer et ouvrir (libérer), au moins partiellement, une ouverture 7 que présente la verseuse 2.

Selon l'invention, la seconde partie 4 est solidarisée à la première partie 3 par une liaison fixe. En particulier, la seconde partie 4 présente une capacité de déformation élastique ayant un module de Young compris entre 0.001 et 0,1 GPa. Nous comprenons par le terme « mobile » qui peut prendre diverses positions du fait de la déformation élastique du matériau par rapport à la seconde partie tout en étant solidaire de celle-ci.

La première partie 3 comprend un matériau plastique rigide tel que par exemple un polypropylène. Quant à la seconde partie 4, elle comprend un matériau élastomère tel que le silicone ou le caoutchouc. Le couvercle 1 peut être obtenu par surmoulage ou bi-injection de manière connue.

La première partie 3 présente un bord périphérique 5, ici circulaire, qui est destiné à reposer sur la bordure périphérique 6 que présente la verseuse 2. La deuxième partie 4 se présente sous la forme d'une languette ou lèvre. Elle présente une extrémité proximale 8 et une extrémité distale 9. Cette dernière est prévue, bien entendu quand la seconde partie 4 est montée, pour s'étendre au-delà du bord périphérique 5 de la première partie 3. On peut prévoir (voir figure 7) qu'une échancrure 10, en forme de V, soit réalisée à l'extrémité distale 9 de la seconde partie 4. Celle-ci peut présenter une épaisseur comprise entre 2 et 5 mm. Sa longueur peut être de l'ordre de 80 mm et sa largeur de l'ordre de 50 mm. Un ou plusieurs orifices 29 de réception de boisson peuvent être prévus sur le couvercle 1.

La liaison fixe prévue entre les première et seconde parties peut être réalisée par tout moyen de fixation permettant d'éviter un pivotement ou rotation de la seconde partie 4 par rapport à la première 3. La première partie 3 rigide présente une entaille 11 ou une découpure dans laquelle est reçue la seconde partie 4 montée mobile. L'entaille 11 correspond sensiblement à la largeur de la seconde partie 4. La première partie 3 présente également une zone de fixation 12 située, ici, à proximité du centre du couvercle 1. Dans cette zone de fixation 12, une portion 13 transversale (par rapport à la seconde partie longitudinale) que présente le couvercle 1 est agencée pour retenir l'extrémité proximale 8 de la seconde partie 4. La liaison fixe permet d'immobiliser ainsi à cet endroit la seconde partie 4.

Sur les figures 2 et 3, on aperçoit que la liaison est réalisée par un assemblage type tenon/mortaise. La portion 13 de couvercle 1 comprend une gorge 14 formée par deux pattes 15, 15' comprenant chacune une ailette 16, 16', l'extrémité proximale 8 de la seconde partie présentant une forme en T. La portion 13 de couvercle 1 présente également une zone d'insertion (non représentée) pour insérer l'extrémité proximale 8 et la faire coulisser dans la gorge 14. L'extrémité proximale 8 est alors retenue par les ailettes 16, 16'. Dans ce mode de réalisation, les première 3 et secondes 4 parties peuvent être démontables/amovibles. Sur la figure 5 les premières et secondes parties sont fixées par rivetage. Dans cet exemple, l'extrémité proximale 8 de la seconde partie 4 présente une surface de contact 17 qui est disposée en dessous d'une face de contact 18 prévue sur la portion 13 du couvercle 1, la solidarisation étant effectuée par un rivet 19. Dans une variante de ce mode de fixation, la face 18 et la surface 17 de contact sont soudées ou collées. Sur la figure 6, la portion 13 du couvercle 1 présente également deux pattes 15, 15' formant une fente 20. Une des pattes 15, 15' présente des lumières 21 dans lesquelles des saillies 22 prévues à l'extrémité proximale 8 se clippent quand cette dernière est insérée dans la fente 20. Dans cet exemple, les premières et secondes parties peuvent également être démontables pour faciliter le nettoyage.

Dans les modes de réalisation décrits ci-dessus, nous comprenons que la seconde partie est solidarisée à la première partie par une unique liaison fixe constituant un point d'appui ce qui, grâce à la flexibilité, souplesse et déformation de la seconde partie, autorise de nombreuses positions et notamment que celle-ci prenne appui sur la paroi latérale 24 de la verseuse pour réduire le débit de versement du liquide contenu dans la verseuse.

Comme énoncé précédemment, l'invention concerne un ensemble 30 comprenant le couvercle 1 présentant les caractéristiques décrites ci-dessus et une verseuse 2.

La verseuse 2 est particulièrement destinée à une machine de préparation de boisson infusée (non représentée). La verseuse présente de manière connue un fond 23, duquel s'élève une paroi latérale 24. La partie supérieure de la paroi latérale 24 présente une bordure périphérique 6 qui forme une ouverture 7 et un bec verseur 25. Le couvercle 1 est prévu pour être amovible ou démontable vis-à-vis de la verseuse 2 et est agencé pour ouvrir et fermer au moins partiellement l'ouverture 7 et le bec verseur 25 par lequel la boisson est versée. Dans une situation où le couvercle 1 est posé sur l'ouverture 7, la seconde partie 4 du couvercle 1 est mobile entre au moins une première position et une deuxième position décrites ci-après.

La figure 2 illustre la seconde partie 4 du couvercle 1 dans la première position dans laquelle l'extrémité distale 9 repose sur la bordure périphérique 6 de la verseuse 2 et dans laquelle elle n'empêche pas le versement de la boisson. La seconde partie 4 flexible s'étend sensiblement dans une direction horizontale, parallèle à la direction longitudinale X. Un utilisateur souhaitant une quantité de boisson infusée de café, café au lait, etc. verse celle-ci contenue dans la verseuse dans un récipient adapté. La boisson est versée normalement, sans limitation de débit par le bec verseur 24. La seconde partie 4 flexible et souple ne permet pas de fermer totalement l'ouverture 7, ni le bec verseur 25.

La figure 3 illustre la seconde partie 4 du couvercle 1 dans la deuxième position dans laquelle l'extrémité distale 9 de celle-ci se trouve à l'intérieur de la paroi latérale 24 de la verseuse 2. L'utilisateur qui souhaite obtenir une préparation multicouches de différents liquides (pouvant être de différentes textures) par exemple, un « latte macchiato » (lait taché en français) qui comprend une couche de lait chaud, une couche de café espresso et une couche de mousse de lait, doit, dans une situation de service, verser le café délicatement et lentement pour que celui-ci se place entre les deux couches à base de lait. On entend par situation de service, le fait de servir et de verser une boisson. Pour cela, la seconde partie 4 du couvercle 1 doit réduire et limiter le débit de versement. Dans ce cas, l'utilisateur introduit la seconde partie 4 flexible et souple du couvercle 1 à l'intérieur de la verseuse 2. La seconde partie est située avantageusement en regard du bec verseur 25. Des parties latérales 26, 26' de l'extrémité distale 9 de la seconde partie 4 se trouve ainsi plaquées et portées contre la paroi latérale 24 interne de la verseuse 2. Du fait d'un défaut d'étanchéité, de la dimension (forme en languette, rayons de courbures différents de la seconde partie et de la verseuse), ainsi que de la souplesse de la seconde partie 4 du couvercle, il est défini un jeu ou espace 27 entre la paroi latérale 24 interne de la verseuse 2 et l'extrémité distale 9 de cette seconde partie (voir figure 4) de sorte à réduire et limiter le débit de la boisson infusée. On aperçoit également que la deuxième partie 4 flexible et souple est sensiblement courbée à l'intérieur de la verseuse 2 et que la paroi latérale 24 la maintient dans cette forme et dans cette position.

Dans une variante de réalisation lorsque la seconde partie 4 se trouve à l'intérieur de la verseuse 2 et du fait de la forme du bec verseur 25 qui s'étend sensiblement au-delà de la paroi latérale 24 de la verseuse 2, l'extrémité distale 9 (les parties latérales 26, 26') est en appui intérieurement, de part et d'autre du bec verseur 24, contre la paroi latérale 24 interne de la verseuse 2. De la sorte un passage 28 est défini sous le bec verseur 25 entre la paroi latérale 24 interne et l'extrémité distale 9.

L'invention est décrite dans ce qui précède à titre d'exemple. Il est entendu que l'homme du métier est à même de réaliser différentes variantes de réalisation de l'invention, en associant par exemple les différentes caractéristiques ci-dessus prises seules ou en combinaison, sans pour autant sortir du cadre de l'invention.

## Revendications

1. Ensemble comprenant
- un couvercle (1) destiné à une verseuse (2), le couvercle (1) comprenant une première partie (3) et une seconde partie (4) flexible par rapport à la première partie (3), la seconde partie comprenant une extrémité proximale (8) et une extrémité distale (9), la seconde partie (4) étant solidarisée à la première partie (3) via l'extrémité proximale (8) par une liaison fixe, la seconde partie (4) présentant une capacité de déformation élastique ayant un module de Young compris entre 0.001 et 0.1 GPa de sorte à être mobile du fait de sa déformation entre au moins deux positions, et
- une verseuse (2) pour machine de préparation de boisson et destinée contenir et verser ladite boisson, la verseuse (2) présentant un fond (23), duquel s'élève une paroi latérale (24), une ouverture (7) et un bec verseur (25) formés par une bordure périphérique (6) de la paroi latérale (24), le couvercle (1) étant amovible vis-à-vis de la verseuse (2) et agencé pour ouvrir et fermer au moins partiellement l'ouverture (7) et le bec verseur (25) par lequel la boisson est versée ;
ledit ensemble étant **caractérisé en ce que** dans une situation où le couvercle (1) est posé sur l'ouverture (7), la seconde partie (4) du couvercle (1) est mobile entre au moins :
- une première position dans laquelle l'extrémité distale (9) repose sur la bordure périphérique (6) de la verseuse (2) et dans laquelle elle n'empêche pas le versement de la boisson ; et,
- une deuxième position dans laquelle l'extrémité distale (9) se trouve à l'intérieur de la paroi latérale (24) de la verseuse (2) et dans laquelle au moins une partie (26, 26') de l'extrémité distale (9) est plaquée contre la paroi (24) de la verseuse (2).

2. Ensemble selon la revendication 1, **caractérisé en ce que** la première partie (3) du couvercle (1) présente une entaille (11) dans laquelle est reçue la seconde partie (4) montée mobile.

3. Ensemble selon la revendication 2, **caractérisé en ce que** la première partie (3) du couvercle (1) présente un bord périphérique (5) et l'extrémité distale (9) de la seconde partie (4) s'étendant au-delà dudit bord périphérique (5).

4. Ensemble selon la revendication 3, **caractérisé en ce que** l'extrémité distale (9) de la seconde partie (4) du couvercle (1) comprend une échancrure (10).

5. Ensemble selon l'une des revendications 1 à 4, **caractérisé en ce que** la première partie (3) du couvercle (1) comprend un matériau plastique rigide et la seconde partie (4) comprend un matériau élastomère.

6. Ensemble selon l'une des revendications 4 ou 5, **caractérisé en ce que** la liaison fixe est une fixation qui immobilise à cet endroit la seconde partie (4).

7. Ensemble (30) selon la revendication 1, **caractérisé en ce qu'**au moins dans la deuxième position, la seconde partie (4) est située en regard du bec verseur (25).

8. Ensemble (30) selon la revendication 7, **caractérisé en ce que** dans la deuxième position, un jeu est défini entre la paroi latérale (24) de la verseuse (2) et l'extrémité distale (9) de la seconde partie (4) pour autoriser un débit limité de la boisson lors du versement.

9. Ensemble (30) selon la revendication 1 ou 8, **caractérisé en ce que** dans la deuxième position, un passage (28) est défini sous le bec verseur (25) par lequel la boisson peut sortir alors que l'extrémité distale (9) de la seconde partie du couvercle est en appui intérieurement, de part et d'autre du bec verseur (2), contre la paroi latérale (24) de la verseuse (2).

## Patentansprüche

1. Einheit, umfassend
- einen Deckel (1), der für eine Kanne (2) vorgesehen ist, wobei der Deckel (1) einen ersten Teil (3) und einen zweiten Teil (4) umfasst, der in Bezug auf den ersten Teil (3) flexibel ist, wobei der zweite Teil ein proximales Ende (8) und ein distales Ende (9) umfasst, der zweite Teil (4) über eine feste Verbindung via das proximale Ende (8) fest mit dem ersten Teil (3) verbunden ist, dadurch, dass der zweite Teil (4) eine elastische Verformbarkeit mit einem Young'schen Modul im Bereich zwischen 0,001 und 0,1 GPa aufweist, sodass er aufgrund seiner Verformung zwischen mindestens zwei Stellungen beweglich ist, und
- eine Kanne (2), die für eine Getränkezubereitungsmaschine und dazu vorgesehen ist, das Getränk zu enthalten und auszugießen, wobei die Kanne (2) einen Boden (23) aufweist, von dem sich eine Seitenwand (24) erhebt, eine Öffnung (7) und eine Ausgusstülle (25), die von einem Umfangsrand (6) der Seitenwand (24) gebildet werden, wobei der Deckel (1) gegenüber der Kanne (2) abnehmbar und dafür eingerichtet ist, die Öffnung (7) und die Ausgusstülle (25), über die das Getränkt ausgegossen wird, mindestens teilweise zu öffnen und zu schließen;
wobei die Einheit **dadurch gekennzeichnet ist, dass** in einer Situation, in der der Deckel (1) auf die Öffnung (7) gesetzt ist, der zweite Teil (4) des Deckels (1) beweglich ist zwischen mindestens:
- einer ersten Stellung, in der das distale Ende (9) auf dem Umfangsrand (6) der Kanne (2) ruht und in der es das Ausgießen des Getränks nicht verhindert; und
- einer zweiten Stellung, in der sich das distale Ende (9) innerhalb der Seitenwand (24) der Kanne (2) befindet und in der mindestens ein Teil (26, 26') des distalen Endes (9) gegen die Wand (24) der Kanne (2) gedrückt wird.

2. Einheit nach Anspruch 1, **dadurch gekennzeichnet, dass** der erste Teil (3) des Deckels (1) eine Einkerbung (11) aufweist, in der der zweite Teil (4) beweglich montiert aufgenommen ist.

3. Einheit nach Anspruch 2, **dadurch gekennzeichnet, dass** der erste Teil (3) des Deckels (1) einen Umfangsrand (5) und das distale Ende (9) des zweiten Teils (4) aufweist, das sich über den Umfangsrand (5) hinaus erstreckt.

4. Einheit nach Anspruch 3, **dadurch gekennzeichnet, dass** das distale Ende (9) des zweiten Teils (4) des Deckels (1) einen Ausschnitt (10) umfasst.

5. Einheit nach einem der Ansprüche 1 bis 4, **dadurch gekennzeichnet, dass** der erste Teil (3) des Deckels (1) ein starres Kunststoffmaterial umfasst, und der zweite Teil (4) ein Elastomermaterial umfasst.

6. Einheit nach einem der Ansprüche 4 oder 5, **dadurch gekennzeichnet, dass** die feste Verbindung eine Befestigung ist, die den zweiten Teil (4) an dieser Stelle immobilisiert.

7. Einheit (30) nach Anspruch 1, **dadurch gekennzeichnet, dass** mindestens in der zweiten Stellung der zweite Teil (4) der Ausgusstülle (25) zugewandt liegt.

8. Einheit (30) nach Anspruch 7, **dadurch gekennzeichnet, dass** in der zweiten Stellung ein Spalt zwischen der Seitenwand (24) der Kanne (2) und dem distalen Ende (9) des zweiten Teils (4) definiert wird, um einen begrenzten Durchfluss des Getränks beim Ausgießen zu gestatten.

9. Einheit (30) nach Anspruch 1 oder 8, **dadurch gekennzeichnet, dass** in der zweiten Stellung ein Durchlass (28) unter der Ausgusstülle (25) definiert ist, über den das Getränk austreten kann, während das distale Ende (9) des zweiten Teils des Deckels innen auf beiden Seiten der Ausgusstülle (2) gegen die Seitenwand (24) der Kanne (2) anliegt.

## Claims

1. Assembly comprising
- a lid (1) intended for a coffee pot (2), the lid (1) comprising a first portion (3) and a second portion (4) that is flexible with respect to the first portion (3), the second portion comprising a proximal end (8) and a distal end (9), the second portion (4) being integral with the first portion (3) via the proximal end (8) by a fixed connection, the second portion (4) having an elastic deformation capacity that has a Young's modulus between 0.001 and 0.1 GPa in such a way as to be mobile due to the deformation thereof between at least two positions, and
- a coffee pot (2) for a machine for preparing beverages and intended to contain and to pour said beverage, the coffee pot (2) having a bottom (23), from which rises a side wall (24), an opening (7) and a pouring spout (25) formed by a peripheral edge (6) of the side wall (24), the lid (1) being removable with respect to the coffee pot (2) and arranged to open and close at least partially the opening (7) and the pouring spout (25) through which the beverage is poured;
said ensemble being **characterised in that** in a situation wherein the lid (1) is placed on the opening (7), the second portion (4) of the lid (1) is mobile between at least:
- one first position wherein the distal end (9) rests on the peripheral bordure (6) of the coffee pot (2) and wherein it does not prevent the pouring of the beverage; and,
- one second position in the distal end (9) is located inside the side wall (24) of the coffee pot (2) and wherein at least a portion (26, 26') of the distal end (9) is thrust against the wall (24) of the coffee pot (2).

2. Assembly according to claim 1, **characterised in that** the first portion (3) of the lid (1) has a notch (11) in which is received the second portion (4) mounted movable.

3. Assembly according to claim 2, **characterised in that** the first portion (3) of the lid (1) has a peripheral edge (5) and the distal end (9) of the second portion (4) extending beyond said peripheral edge (5).

4. Assembly according to claim 3, **characterised in that** the distal end (9) of the second portion (4) of the lid (1) comprises an indentation (10).

5. Assembly according to one of claims 1 to 4, **characterised in that** the first portion (3) of the lid (1) comprises a rigid plastic material and the second portion (4) comprises an elastomer material.

6. Assembly according to one of claims 4 or 5, **characterised in that** the fixed connection is a fastening that immobilises the second portion (4) at this location.

7. Assembly (30) according to claim 1, **characterised in that** at least in the second position, the second portion (4) is located facing the pouring spout (25).

8. Assembly (30) according to claim 7, **characterised in that** in the second position, a clearance is defined between the side wall (24) of the coffee pot (2) and the distal end (9) of the second portion (4) in order to authorise a limited flow rate of the beverage during pouring.

9. Assembly (30) according to claim 1 or 8, **characterised in that** in the second position, a passage (28) is defined under the pouring spout (25) through which the beverage can exit while the distal end (9) of the second portion of the lid is bearing interiorly, on either side of the pouring spout (2), against the side wall (24) of the coffee pot (2).
